# EUROPÄISCHE PATENTSCHRIFT

(11) **EP 0 449 041 B1**
(45) Veröffentlichungstag und Bekanntmachung des Hinweises auf die Patenterteilung: **11.09.1996**
(21) Anmeldenummer: 91103879.2
(22) Anmeldetag: 14.03.1991
(51) Int. Cl.: C08L 1/24, C08L 1/06

(54) **Cellulose-Kunststoff-Blends, Verfahren zur Herstellung und ihre Verwendung**
Blends of cellulose and synthetic polymers, manufacture and uses thereof
Mélanges de cellulose et de polymères synthétiques, méthode d'obtention et applications

(30) Priorität: 27.03.1990 DE 4009758
(43) Veröffentlichungstag der Anmeldung: 02.10.1991
(73) Patentinhaber: Wolff Walsrode Aktiengesellschaft, D-29655 Walsrode (DE)
(72) Erfinder: Müller, Hanns-Peter, Dr., W-5060 Bergisch Gladbach 2 (DE); Hassel, Tillmann, Dr., W-5000 Köln 80 (DE); Weber, Gunter, Dr., W-3032 Fallingbostel (DE)
(74) Vertreter: Braun, Rolf, Dr.

(56) Entgegenhaltungen:
- AT-A- 342 182
- DE-A- 851 997
- GB-A- 1 164 539
- GB-A- 2 008 126
- CHEMICAL ABSTRACTS, vol. 87, 1976, Columbus, Ohio, US; abstract no. 118993A, KOUTNY K & KOTOUCKOVA M.: 'Leather substitutes from polyurethanes'

## Beschreibung

Die vorliegende Erfindung betrifft neuartige Blends auf der Basis von Cellulosehydrat und Polyurethan, wobei im folgenden die Begriffe Mischungen, Blends und Legierungen synonym gebraucht werden.

Die Erfindung bezieht sich ferner auf ein Verfahren zur Herstellung der Cellulose-Kunststoff-Blends und ihre Verwendung.

Cellulosehydrat-Formkörper werden bevorzugt nach dem Viskoseverfahren hergestellt (K. Götze, Chemiefasern nach dem Viskoseverfahren, 3. Auflage, Band 1 und 2, Springer Verlag, 1967). Die allgemein als Viskoselösung bezeichnete alkalische Cellulosexanthogenat-Lösung wird z.B. durch eine ring- oder schlitzförmige Düse ausgepreßt und in saurer Lösung als Cellulosehydrat-Gel koaguliert und zu Cellulosehydrat regeneriert.

Durch die Zusammensetzung der Viskose, den anschließenden Reifungsprozeß und das Einarbeiten von üblichen Hilfs- und Zusatzstoffen lassen sich die Eigenschaften der resultierenden Formkörper in gewissen Grenzen variieren.

Ein Nachteil der Cellulosehydrat-Formkörper ist aber, daß diese während der Lagerung mehr und mehr verspröden und verharten. Ein weiterer Nachteil der Cellulose-hydrat-Formkörper - insbesondere der Folien -ist ihr Knistern und die leichte Einreißbarkeit.

Cellulose-Legierungen sind z.T. literaturbekannt. Y. Nishio und R. St. John Manley beschreiben in Macromolecules 21, 1988, 1270-1277 Cellulose/Polyvinyl-alkohol-Blends.

Aus USA 3721582 sind Mischungen aus regenerierter Cyanoethylcellulose und Acrylnitril bekannt.

Aus USA 3951889 sind Mischungen aus regenerierter Cellulose und Polyvinylpyrrolidon bekannt.

Gemäß JP Kokai 57/117636 werden Artikel aus Seide mit einem Formaldehydharnstoff-Copolymer behandelt.

DE A 3711571 beschreibt ein Verfahren, das durch Anwendung von permanenten Weichmachern die mechanischen Eigenschaften von Cellulose verbessern soll.

Aus Chemical Abstracts, Vol. 87, 1976, Columbus, Ohio, US; Abstract No. l1 8993 sind künstliche Ledermaterialien bekannt, die aus Polyurethan und Kunstseide-Plättchen hergestellt wurden. Dabei ist jedoch der Gehalt an Kunstseide relativ niedrig.

In GB-A-164 539 sind Mischungen aus Triacetyl-Cellulose und Polyurethan beschrieben die als Folien eingesetzt werden. Um entsprechende Eigenschaften zu erzielen, müssen jedoch Triacetylgruppen vorhanden sein.

Weitere in der Literatur bekannte Verfahren beziehen sich auf die Herstellung von Cellulosehydrat mit Hilfe des Carbamatprozesses, mit Hilfe von Dimethylacetamid/Li C1 und des physikalischen Spinnverfahrens mit N-Methyl-morpholin-N-oxid als Lösungsmittel.

Die bekannten Verfahren zur Gewinnung von Cellulose-Formkörpern und Cellulose-Legierungen führen jedoch zu Produkten, z.B. Folien, die im Vergleich zu modernen Kunststoffolien in ihren technologischen Eigenschaften nachteilig sind.

Es ist daher Aufgabe der vorliegenden Erfindung, Cellulose-Mischungen bereitzustellen, die in ihren mechanischen Eigenschaften, wie z.B. Reißfestigkeit, Elastizität und Knisterfreiheit, den modernen Kunststoffen entsprechen und gleichzeitig biologisch abbaubar bzw. kompostierbar sind.

Diese neuartigen Folien und Formkörper dienen z.B. als Verpackungsmaterialien, Müllbeutel, Einkaufstüten, Mulch- und Silofolien für die Landwirtschaft, Hygiene-artikel, Außenhüllen für Babywindeln, Transparentpapiere, Kopierfolien und dekorative Materialien.

Gegenstand der Erfindung sind Legierungen aus Cellulose und wenigstens einem zusätzlichen Legierungsbestandteil, dadurch gekennzeichnet, daß als zusätzlicher Legierungs-bestandteil ein Polyurethan(harnstoff) enthalten ist. Die Legierung besteht zumindestens zu 20 Gew.-% aus Cellulosehydrat. Ferner sind wenigstens 5 Gew.-% des zusätzlichen Legierungsbestandteils ein Polyurethan(harnstoff). In einer weiteren bevorzugten Ausführungsform kann neben dem Polyurethan(harnstoff) als weiterer Legierungsbestandteil insbesondere Polyvinylpyrrolidon, Polyvinylalkohol und/oder Polyethylenoxidpolyether insbesondere mit einem Molekulargewicht von 10 000 bis 50 000 enthalten sein.

Weitere bevorzugte Ausführungsformen sind dadurch gekennzeichnet, daß der verwendete Polyurethan(harnstoff) 0,1 - 40 Milliäquivalente an ionischen Gruppen oder an in ionische Gruppen überführbaren Gruppen, bezogen auf 100 g Polyurethan(harnstoff), und 0,5 - 10 Gew.-X an in Polyetherketten eingebauten Ethylenoxideinheiten aufweist.

Weitere bevorzugte Ausführungsformen sind dadurch gekennzeichnet, daß das verwendete Polyurethan bevorzugt aus Isophorondiisocyanat, Hexamethylendiisocyanat und H₁₂-MDI aufgebaut ist.

Weitere bevorzugte Ausführungsformen sind dadurch gekennzeichnet, daß beim Aufbau des verwendeten Polyurethans gegebenenfalls Kettenverlängerer vom Typ Butandiol, Hexandiol, Ethylenglykol, Hexamethyldiamin, Bis-(3-aminopropyl)-methylamin für sich allein oder in Mischung mit anderen verwendet werden.

Besonders bevorzugte Ausführungsformen sind dadurch gekennzeichnet, daß das verwendete Polyurethan aus wasserlöslichen Polyethern des MG-Bereichs 400 - 10 000 und aus Diisocyanaten aufgebaut ist.

Gegenstand der Erfindung ist weiterhin ein Verfahren zur Herstellung von Cellulose-Kunststoff-Legierungen, dadurch gekennzeichnet, daß man Viskose mit den Legierungsbestandteilen - gegebenenfalls unter Verwendung weiterer Hilfs- und Zusatzstoffen mischt - durch saure Koagulations- und Regeneriermittel bei T >40°C in Cellulosehydrat-Gel Legierungen überführt, mit üblichen Weichmachern behandelt und abschließend trocknet.

In einer bevorzugten Ausführungsform wird das verwendete Polyurethan in flüssiger Form, gelöst oder dispergiert in Wasser, zum Einsatz gebracht.

Unter den erfindungsgemäß zu verwendenden Polyurethan(harnstoffen) werden sowohl reine Polyurethane verstanden, als auch Polyurethane, bei denen ein Teil der Polyurethangruppen durch Polyharnstoffgruppen ersetzt sind.

Bevorzugte Polyurethane sind erhältlich auf Basis von wenigstens einem Diisocyanat wenigstens einem Makropolyol, worunter eine höhere molekulare hydroxylgruppenhaltige Verbindung mit einem Molekulargewicht < 400 verstanden wird, und gegebenenfalls wenigstens einem kurzkettigen Kettenverlängerer mit einem Molekulargewicht von maximal 399, insbesondere einem kurzkettigen Diol.

Geeignet sind grundsätzlich alle bekannten aromatischen, alicyclischen und aliphatischen Polyisocyanate. Zur Synthese linearer Produkte werden jedoch speziell Diisocyanate der Formel Q (NCO)₂ verwendet, in welcher Q für einen aromatischen Kohlenwasserstoffrest mit 6 bis 15 Kohlenstoffatomen, für einen aliphatischen Kohlenwasserstoffrest, einen cycloaliphatischen oder einen gemischt aliphatisch/cycloaliphatischen Kohlenwasserstoffrest mit 2 bis 15 Kohlenstoffatomen steht. Beispiele solcher Diisocyanate sind Toluylendiisocyanat, Naphthyldiisocyanat, Diphenylmethandiisocyanat, Hexamethylendiisocyanat (HDI), Isophorondiisocyanat (IPDI), Cyclohexan-1,4-diisocyanat und Perhydrodiphenylmethandiisocyanat (H₁₂MDI). Diese Isocyanate können auch als Gemische verwendet werden. Bevorzugt werden IPDI, HDI und H₁₂MDI.

Als Makropolyole können Polyester-, Polyether-, Polythioether-, Polylacton-, Polycarbonat-, Polyestercarbonat-, Polyethercarbonat-, Polyacetal- und Polyester-amidpolyole zum Polyurethan-Aufbau eingesetzt werden. Auch hier ist es besonders günstig, Makropolyole mit einer OH-Funktionalität von zwei zu verwenden.

Als Makropolyamine können die aus den Makropolyolen zugänglichen Polyamine eingesetzt werden. Auch hier ist insbesondere günstig, Makrodiamine zu verwenden. Die Verwendung von Makropolyolen ist besonders bevorzugt.

Besonders bevorzugte Verbindungen sind:
Polyesterdiole, Polyamiddiole, Polyetherdiole, Polythioetherdiole, Polylactondiole, Polycarbonatdiole, Polyethercarbonatdiole, Polyacetaldiole und Polyamid-diole.

Die erfindungsgemäß vorteilhaft verwendbaren Polyetherdiole sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B, in Gegenwart von Lewis-Katalysatoren wie BF₃, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Diole, primäre Amine, z.B. Ethylenglykol, Propylenglykol-(1,3) oder -(1,2), 4,4'-Dihydroxy-diphenylpropan, Anilin, Methylamin, hergestellt. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioetherdiolen seien insbesondere die Kondensationsprodukte von Thiodiglykol mit sich selbst und/oder mit anderen Glykolen, Dicarbonsäuren, Formaldehyd und/oder Aminocarbonsäuren angeführt. Je nach den Co-Komponenten handelt es sich bei den Produkten z.B. um Polythiomischether-, Polythioetherester- oder Polythioetheresteramiddiole. Unter Polylactondiolen sind Produkte zu verstehen, die man erhält, wenn man eine ringöffnende Polymerisation eines Monolactons unter Verwendung eines der bereits erwähnten Diole als Starter durchführt. Geeignet Lactone sind beispielsweise Butyrolacton und ε-Caprolacton.

Polycarbonatdiole sind solche der an sich bekannten Art, wie sie z.B. durch Umsetzung von Diolen wie Propandiol(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat oder Phosgen, hergestellt werden können (DE-A-1 694 080, 1 915 908 und 2 221 751; DE-OS-2 605 024). Wenn für diese Umsetzung anstelle der Diole kurzkettige Polyetherdiole oder Polyesterdiole verwendet werden, entstehen Polyethercarbonat- bzw. Polyestercarbonatdiole.

Als Polyacetaldiole kommen z.B. die aus Glykolen, wie Diethylenglykol, Triethylenglykol, 4,4'-DioxeLhoxydiphenyldimethylmethan, Hexandiol und Formaldehyd herstellbaren Verbindungen in Frage. Auch durch Polymerisation cyclischer Acetale wie z.B. Trioxan (DE-OS-1 694 128) lassen sich erfindungsgemäß geeignete Polyacetaldiole herstellen. Zu den Polyesteramid- und Polyamiddiolen zählen z.B. die aus zweiwertigen gesättigten Carbonsäuren bzw, deren Anhydriden und zweiwertigen gesättigten Aminoalkoholen, Diaminen und deren Mischungen gewonnenen, linearen Kondensate.

Es ist auch möglich, als makromolekulare Verbindungen Makropolyamine, insbesondere Makrodiamine, zu verwenden. Derartige Makropolyamine können beispielsweise aus Polyetherpolyolen gemäß DAS 1 215 373 durch direkte Umsetzung mit Ammoniak hergestellt werden. Man kann aber auch die Makropolyole mit Diisocyanaten, bevorzugt aromatischen Diisocyanaten, in Isocyanat-Prepolymere überführen und diese Prepolymere zu den aminoterminierten Verbindungen hydrolysieren.

Geeignete Kettenverlängerer sind die in der PU-Chemie üblicherweise verwendeten kurzkettigen, in der Regel gegenüber Isocyanaten difunktionellen Alkohole, Amine und Aminoalkohole. Beispiele für derartige Verbindungen sind Alkohole wie Ethylenglykol, 1,4-Butandiol, 1,6-Hexandiol, Neopentylglykol, Hydrochinon-bis-2-hydroxy-ethylether, 1,4-Cyclohexandiol, Diethylenglykol, 4,4'-Dihydroxydicyclohexylmethan; Amine wie Ethylendiamin, N,N'-Dimethyl-ethylendiamin, 1,6-Diaminohexan, Isophorondiamin, 4,4'-Diamino-dicyclohexylmethan, N,N',N"-Trimethyl-diethylentriamin, Piperazin und Aminoethyl-piperazin. Als Aminoalkohole seien beispielsweise Ethanolamin und N-2-Hydroxyethylpiperazin genannt.

Zur Regelung der Molmasse der erfindungsgemäß einsetzbaren Polyurethan-(harnstoffe) können auch gegebenenfalls in bekannter Weise Kettenregler eingesetzt werden. Hierbei handelt es sich um monofunktionelle Isocyanate, Alkohole und/oder Amine wie beispielsweise Butylisocyanat, Phenylisocyanat, Ethanol, Isopropanol, Decanol oder Dibutylamin, Hexylamin, Morpholin.

Unter weiteren Hilfs- und Zusatzstoffen werden zum einen die dem Fachmann bekannten Katalysatoren der Polyurethanchemie wie beispielsweise Zinn-II-octoat, Dibutylzinndilaurat, Titantetrabutylat, Eisen-II-acetylacetonat, Diazabicyclooctan und N,N-Tetramethylethylendiamin verstanden. Andere Zusatzstoffe sind beispielsweise Füllstoffe und Verstärkungsstoffe wie Glasfasern, C-Fasern, TiO₂, Diatomeenerde, aromatische Polyamide, LC-Polyester auch in gemahlener Form, Quarzmehl und Polyharnstoffe sowie Farbstoffe wie anorganische oder organische Pigmente.

Die im erfindungsgemäßen Verfahren zur Verbesserung der mechanischen Eigenschaften und der Sprödigkeit eingesetzten Polyurethan(harnstoffe) weisen vorzugsweise einen die Dispergierbarkeit in Wasser gewährleistenden Gehalt an chemisch eingebauten hydrophilen Gruppen auf, und zwar in Form von (a) ionischen Gruppen und/oder (b) durch eine Neutralisationsreaktion in ionische Gruppen überführbaren Gruppen und/oder (c) Ethylenoxideinheiten (-CH₂-CH₂-O-) innerhalb von in das Polyurethan(harnstoff)molekül eingebauten Polyetherketten.

Für das erfindungsgemäße Verfahren sind im Prinzip alle an sich bekannten, bei Auftrocknen klebfreie Filme bildende, wäßrige Polyurethan(harnstoff)dispersionen geeignet, die - gegebenenfalls infolge eines Gemisches an Alkoholen sowie gegebenenfalls weiteren organischen Lösungsmitteln - weitgehend unempfindlich gegenüber einer Koagulation durch Elektrolyte sind. Wie sich zeigte, spiegeln sich die mechanischen Eigenschaften des Polyurethan(harnstoff)s, z,B, hinsichtlich Zugfestigkeit und Bruchdehnung, auch in den Eigenschaften des ausgehärteten Verbundwerkstoffs wider.

Für die Herstellung von Polyurethan(harnstoff)dispersionen in Wasser sind eine Reihe von Verfahren bekannt geworden. Eine zusammenfassende Darstellung findet sich z.B. bei D. Dietrich und H. Reiff in "Die Angewandte Makromolekulare Chemie", 26, 1972, 85-106, D. Dieterich et al. in "Angewandte Chemie", 82, 1970, 53-63, D. Dieterich et al. in J. Oil Col. Chem. Assoc. 53, 1970, 363-379, D. Dieterich in "Die Angewandte Makromolekulare Chemie", 98, 1981, 133-158 sowie in "Chemie und Technologie makromolekularer Stoffe" (29. Veröffentlichung der Fachhochschule Aachen zum 9. Kolloquium am 8. Mai 1981 an der FH Aachen, Fachbereich Chemieingenieurwesen). In diesen Sammelreferaten wird auch eine umfassende Literaturübersicht gegeben. Im folgenden soll, falls nicht ausdrücklich anders vermerkt, der Begriff "Polyurethan" auch harnstoffgruppenhaltige Polymere, d.h. Polyurethanharnstoffe, mit einschließen.

Eines der in der Praxis bevorzugten Herstellungsverfahren für wäßrige Polyurethandispersionen besteht darin, daß ein in einem organischen Lösungsmittel gelöstes NCO-Prepolymeres mit einem Kettenverlängerungsmittel umgesetzt wird. Dabei enthält entweder das Prepolymere oder das Kettenverlängerungsmittel ionische oder zur Ionenbildung befähigte Gruppen. Im Laufe der Polyadditionsreaktion oder danach werden diese zur Ionenbildung befähigten Gruppen in ionische Gruppen übergeführt. Gleichzeitig oder auch anschließend erfolgt die Ausbildung der wäßrigen Dispersion durch Zusatz von Wasser und Abdestillieren des organischen Lösungsmittels.

Wie schon erwähnt, können im erfindungsgemäßen Verfahren sowohl kationische als auch anionische und nichtionische Polyurethandispersionen verwendet werden. Vorzugsweise werden erfindungsgemäß solche wäßrigen Polyurethandispersionen eingesetzt, welche beim Auftrocknen Polyurethanfolien mit elastischen Eigenschaften liefern. Darunter sind insbesondere gummielastische oder mindestens kerbschlagzähe Polyurethane bzw. Polyharnstoffe oder Polyhydrazodicarbonamide zu verstehen, die eine Kugeldruckhärte unter 1400 kg/cm² (60 Sekunden nach DIN 53 456), vorzugsweise eine Shore-Härte D von weniger als 98, aufweisen. Für Verbundstoffe mit speziellen Eigenschaften können selbstverständlich im Einzelfall auch Dispersionen härterer Polyurethane eingesetzt werden.

Für das erfindungsgemäße Verfahren geeignete wäßrige Polyurethandispersionen können, wie oben erläutert, ganz allgemein dann erhalten werden, wenn bei der Herstellung der Polyurethane Komponenten mitverwendet werden, welche ionische bzw. zur Ionenbildung befähigte Gruppen und daneben noch mindestens eine NCO-Gruppe bzw, mindestens ein mit Isocyanatgruppen reagierendes Wasserstoffatom aufweisen. Als Verbindungen dieser Art kommen, gegebenenfalls auch in Mischung, zum Beispiel die folgenden in Frage (siehe auch US-PS 3 756 992, US-PS 3 479 310 oder US-PS 4 108 814):
1) Verbindungen, die basische, mit wäßrigen Säuren neutralisierbare oder quaternierbare tertiäre Aminogruppen aufweisen:
   a) Alkohole,
      insbesondere alkoxylierte aliphatische, cycloaliphatische, aromatische und heterocyclische, sekundäre Amine, z.B. N,N-Dimethylethanolamin, N,N-Diethylethanolamin, N,N-Dibutylethanol-amin, 1-Dimethylamino-propanol-(2), N,N-Methyl-β-hydroxyethyl-anilin, N,N-Methyl-β-hydroxypropyl-anilin, N,N-Ethyl-β-hydroxy-ethyl-anilin, N,N-Butyl-β-hydroxyethylanilin, N-Oxethylpiperidin, N-Oxethylmorpholin, α-Hydroxyethylpyridin und γ-Hydroxyethyl-chinolin.
   b) Diole und Triole,
      insbesondere alkoxylierte aliphatische, cycloaliphatische, aromatische und heterocyclische primäre Amine, z.B. N-Methyl-diethanolamin, N-Butyl-diethanolamin, N-Oleyl-diethanolamin, N-Cyclohexyl-diethanolamin, N-Methyl-diisopropanolamin, N-Cyclohexyl-diisopropanolamin, N,N-Dioxethylanilin, N,N-Dioxyethyl-m-toluidin, N,N-Dioxethyl-p-toluidin, N,N-Dioxy-propylnaphthylamin, N,N-Tetraoxethyl- -aminopyridin, Dioxethylpiperazin, polyethoxyliertes Butyldiethanolamin, polypropoxyliertes Methyldiethanolamin (Mol.-Gew, 1000), polypropoxyliertes Methyldiethanolamin (Mol.-Gew. 2000), Polyester mit tert. Aminogruppen, Tri-[2-hydroxypropyl-(1)]-amin, N,N-Di-n-(2,3-dihydroxypropyl)-anilin, N,N'-DimeLhyl-N,N'-bis-oxyethylhydrazin und N,N'-Dimethyl-N,N'-bis-oxypropylethylendiamin.
   c) Aminoalkohole,
      z.B, durch Hydrierung erhaltene Additionsprodukte von Alkylenoxyd und Acrylnitril an primäre Amine, etwa N-Methyl-N-(3-amino-propyl)-ethanolamin, N-Cyclohexyl-N-(3-amino-propyl)-propanol-(2)-amin, N,N-Bis-(3-amino-propyl)-ethanolamin und N-3-Aminopropyl-diethanolamin.
   d) Amine,
      z.B. N,N-Dimethylhydrazin, N,N-Dimethyl-ethylendiamin, 1-Di-ethylamino-4-amino-pentan, α-Aminopyridin, 3-Amino-N-ethylcarbazol, N,N-Dimethylpropylen-diamin, N-Amino-propyl-piperidin, N-Aminopropyl-morpholin, N-Amino-proipyl-ethylenimin und 1,3-Bis-piperidino-2-amino-propan.
   e) Diamine, Triamine, Amide,
      insbesondere durch Hydrierung von Anlagerungsprodukten von Acrylnitril an primäre oder disekundäre Amine, z.B. Bis-(3-aminopropyl)-methylamin, Bis-(3-aminopropyl)-cyclohexyl-amin, Bis-(3-aminopropyl)-anilin, Bis-(3-aminopropyl)-toluidin, Diaminocarbazol, Bis-(aminopropoxethyl)-butylamin, Tris-(amino-propyl)-amin oder N,N'-Bis-carbonamidopropyl-hexamethylendiamin, sowie durch Anlagerung von Acrylamid an Diamine oder Diole erhältliche Verbindungen.
2) Verbindungen, die zu QuaLernierungsreaktionen befähigte Halogenatome oder entsprechende Ester starker Säuren enthalten:
   2-Chlorethanol, 2-Bromethanol, 4-Chlorbutanol, 3-Brompropanol, β-Chlorethylamin, 6-Chlorhexylamin, Ethanolamin-schwefel-säureester, N,N-Bis-hydroxy-ethyl-N'-m-chlormethylphenylharnstoff, N-Hydroxy-ethyl-N'-chlorhexylharnstoff, Glycerinamino-chlorethylurethan, Chlor-acetal-ethylendiamin, Bromacetyl-dipropyltriamin, Tri-chloracetyl-triethylen-tetramin, Glycerin-α-bromhydrin, polypropoxyliertes Glycerin-α-chlorhydrin, Polyester mit aliphatisch gebundenem Halogen oder 1,3-Dichlorpropanol-2.

An entsprechenden Isocyanaten seien erwähnt:
Chlorhexylisocyanat, m-Chlorphenyl-isocyanat, p-Chlorphenylisocyanat, Bis-chlormethyl-diphenylmethandiisocyanat, 2,4-Diisocyanato-benzylchlorid, 2,6-Diisocyanato-benzylchlorid, N-(4-Methyl-3-isocyanatophenyl)-β-bromethylurethan.
3) Verbindungen, die zur Salzbildung befähigte Carbonsäure- oder Hydroxylgruppen aufweisen:
a) Hydroxy- und Mercapto-carbonsäuren:
   Glykolsäure, Thioglykolsäure, Milchsäure, Trichlormilchsäure, Äpfelsäure, Dioxymaleinsäure, Dioxyfumarsäure, Weinsäure, Dioxyweinsäure, Schleimsäure, Zuckersäure, Zitronensäure, Glycerin-borsäure, Pentaerythrit-borsäure, Mannitborsäure, Salicylsäure, 2,6-Dioxybenzoesäure, Protocatechusäure, α-Resorcylsäure, β-Resorcylsäure, Hydrochinon-2,5-dicarbonsäure, 4-Hydroxyisophthalsäure, 4,6-Dihydroxyisophthalsäure, Oxyterephthalsäure, 5,6,7,8-Tetrahydro-naphthol-(2)-carbonsäure-(3)1 1-Hydroxynaphthoesäure-(2), 2,8-Dihydroxynaphthoesäure-(3), β-Oxypropionsäure, m-Oxybenzoesaure, Pyrazolon-carbonsäure, Harnsäure, Barbitursäure, Resole und andere Formaldehyd-Phenolkondensationsprodukte.
b) Polycarbonsäuren:
   sulfondiessigsäure, Nitrilo-triessigsäure, Ethylendiamintetraessigsäure, Diglykolsäure, Thiodiglykolsäure, Methylen-bis-thioglykolsäure, Malonsäure, Oxalsäure, Bernsteinsäure, Glutarsäure, Adipinsäure, Maleinsäure, Fumarsäure, Gallussäure, Phthalsäure, Tetrachlorphthalsäure, Isophthalsäure, Terephthalsäure, Naphthalintetracarbonsäure-(1,4,5,8), o-Tolylimido-diessigsäure, β-Naphthylimidodiessigsäure, Pyridin-dicarbonsäure, Dithiodipropionsäure.
c) Aminocarbonsäuren:
   Oxalursäure, Anilinoessigsäure, 2-Hydroxy cabazolcarbonsäure-(3), Glycin, Sarkosin, Methionin, α-Alanin, β-Alanin, 6-Aminocapronsäure, 6-Benzoylamino-2-chlorcapronsäure, 4-Amino-buttersäure, Asparaginsäure, Glutaminsäure, Histidin, Anthranilsäure, 2-Ethyl-aminobenzoesäure, N-(2-Carboxyphenyl)-amino-essigsäure, 2-(3'-Amino-benzolsulfonyl-amino)benzoesäure, 3-Aminobenzoesäure, 4-Aminobenzoesäure, N-Phenylaminoessigsäure, 3,4-Diaminobenzoesäure, 5-Aminobenzol-dicarbonsäure, 5-(4'-Aminobenzoyl-amino)-2-amino-benzoesäure.
d) Hydroxy- und Carboxy-sulfonsäuren:
   2-Hydroxyethansulfonsäure, Phenolsulfonsäure(2), Phenolsulfonsäure-(3), Phenolsulfonsäure(4), Phenoldisulfonsäure-(2,4), Sulfoessigsäure, m-Sulfobenzoesäure, p-Sulfobenzoesäure, Benzoesäure-(1)-disulfonsäure-(3,5), 2-Chlorbenzoesäure-(1)-sulfonsäure-(4), 2-Hydroxybenzoesäure-(1)-sulfonsäure-(5), Naphthol-(1)-sulfonsäure, Naphthol-(1)-disulfonsäure, 8-Chlor-naphthol-(1)-disulfonsäure, Naphthol(1)-trisulfonsäure, Naphthol-(2)-sulfonsäure(1), Naphthol-(2)-trisulfonsäure, 1,7-Dihydroxynaphthalinsulfonsäure-(3), 1,8-Dihydroxynaphthalindisulfonsäure-(2,4), Chromotropsäure, 2-Hydroxynaphthoesäure-(3)-sulfonsäure-(6), 2-Hydroxycarbazolsulfonsläure-C7).
e) Aminosulfonsäuren:
   Amidosulfonsäure, Hydroxylamin-monosulfonsäure, Hydrazindisulfonsäure, Sulfanilsäure, N-Phenylaminomethansulfonsäure, 4,6-Dichloranilinsulfonsäure-(2), Phenylendiamin-(1,3)-disulfonsäure-(416), N-Acetylnaphthylamin-(1)-sulfonsäure-(3), Naphthylamin-(1)-sulfonsäure, Naphthylamin-(2)-sulfonsäure, Naphthylamindisulfonsäure, Naphthylamin-trisulfonsäure, 4,4'-Di-(p-aminobenzoyl-amino)-diphenylharnstoff-disulfonsäure-(3,3'), Phenylhydrazindisulfonsäure-(2,5), 2,3-Dimethyl-4-aminoazobenzol-disulfonsäure-(4',5), 4'-Aminostilbendisulfonsäure-(2,7), Taurin, Methyltaurin, Butyltaurin, 3-Amino-benzoesäure-(1)-sulfonsäure-(5), 3-Amino-toluol-N-methan-sulfonsäure, 6-Nitro-1,3-dimethylbenzol-4-sulfaminsäure, 4,6-Diaminobenzol-disulfonsäure-(1,3), 2,4-Diamino-toluolsulfonsäure-(5), 4,4'-Diaminodiphenyl-disulfonsäure-(2,2'), 2-Aminophenol-sulfonsäure-(4), 4,4'-Diaminodiphenyl ether-sulfonsäure-(2), 2-Aminoanisol-N-methansulfonsäure, 2-Amino-diphenylamin-sulfonsäure.

Als salzbindende Mittel kommen für die Gruppe 1 anorganische und organische Säuren sowie Verbindungen mit reaktiven Halogenatomen und entsprechende Ester starker Säuren in Betracht. Einige Beispiele für derartige Verbindungen sind:

Salzsäure, Salpetersäure, Unterphosphorige Säure, Amidosulfonsäure, Hydroxylamin-monosulfonsäure, Ameisensäure, Essigsäure, Glykolsäure, Milchsäure, Chloressigsäure, Bromessigsäureethylester, Sorbit-borsäure, Methylchlorid, Butylbromid, Dimethylsulfat, Diethylsulfat, Benzylchlorid, p-Toluol-sulfonsäuremethylester, Methyl-bromid, Ethylenchlorhydrin, Glycerin-α-bromhydrin, Chloressigester, Chloracetamid, Bromacetamid, Dibromethan, Chlorbrombutan, Dibrombutan, Ethylenoxyd, Propylenoxyd, 2,3-Epoxypropanol.

Die Verbindungen der Gruppe 2 können mit tertiären Aminen, aber auch mit Sulfiden oder Phosphinen quaterniert bzw. terniert werden. Es entstehen dann quaternäre Ammonium- und Phosphonium- bzw. ternäre sulfoniumsalze.

Beispiele dafür sin unter anderem Trimethylamin, Triethylamin, Tributylamin, Pyridin, Triethanolamin sowie die unter Gruppe 1 a) und 1 b) aufgeführten Verbindungen, ferner Dimethylsulfid, Diethylsulfid, Thiodiglykol, Thiodiglykolsäure, Trialkylphosphine, Alkylarylphosphine und Triarylphosphine.

Für die Verbindungen der Gruppe 3 eignen sich anorganische und organische Basen als Salzbildner, z.B. Natriumhydroxid, Kaliumhydroxid, Kaliumcarbonat, Natriumhydrogencarbonat, Ammoniak, primäre, sekundäre und tertiäre Amine, Schließlich sei erwähnt, daß auch organische Phosphorverbindungen als Verbindungen, die zur Salzbildung fähig sind, in Betracht kommen und zwar sowohl einbaufähige basische Phosphine wie z.B. Diethyl-β-hydroxyethylphosphon, Methyl-bis-β-hydroxyethylphosphin, Tris-β-hydroxymethyl-phosphin, als auch Derivate z.B. von Phosphinsäuren, Phosphonigsäuren, Phosphonsäuren sowie Ester der phosphorigen und oder Phosphorsäure sowie deren Thionanaloge, z.B. Bis-(α-hydroxy-isopropyl)-phosphinsäure, Hydroxyalkanphosphonsäure oder Phosphorsäure-bis-glykolester.

Erfindungsgemäß geeignete kationishe Polyurethane werden z.B, nach der DAS 1 270 276 erhalten, wenn beim Aufbau des Polyurethans mindestens eine Komponente mit einem oder mehreren basischen tertiären Stickstoffatomen mitverwendet wird und die basischen tertiären Stickstoffatome des Polyurethans mit Alkylierungsmitteln oder anorganischen bzw. organischen Säuren umgesetzt werden. Dabei ist es grundsätzlich gleichgültig, an welcher Stelle des Polyurethanmakromoleküls sich die basischen Stickstoffatome befinden.

Man kann umgekehrt auch Polyurethane mit reaktiven, zur Quarternierung befähigten Halogenatomen mit tertiären Aminen umsetzen, Weiterhin lassen sich kationische Polyurethane auch unter kettenaufbauender Quarternierung herstellen, indem man z.B. aus gegebenenfalls höhermolekularen Diolen und Isocyanaten mit reaktiven Halogenatomen oder Diisocyanaten und Halogenalkoholen Dihalogenurethane herstellt und diese mit ditertiären Aminen umsetzt. Umgekehrt kann man aus Verbindungen mit zwei Isocyanatgruppen und tertiären Aminoalkoholen ditertiäre Diaminourethane herstellen und diese mit reaktionsfähigen Dihalogenverbindungen umsetzen, Selbstverständlich kann die kationische Polyurethanmasse auch aus einer kationischen salzartigen Ausgangskomponente, etwa einem quarternierten basischen Polyesher oder einem quartären Stickstoff enthaltenden Isocyanat hergestellt werden. Diese Herstellungsmethoden sind z.B. in den deutschen Auslegeschriften 1 184 946, 1 178 586 und 1 179 363, der US-Patentschrift 3 686 108 und den belgischen Patentschriften 653 223, 658 026, 636 799 beschrieben. Dort sind auch die zum Aufbau der salzartigen Polyurethane geeigneten Ausgangsmaterialien aufgeführt,

Die Herstellung von anionischen Polyurethandispersionen kann ebenfalls nach an sich bekannten Verfahren erfolgen. Geeignete anionische Polyurethane werden beispielsweise in der DAS 1 237 306, der DOS 1 570 565, der DOS 1 720 639 und der DOS 1 495 847 beschrieben. Vorzugsweise werden dabei Ausgangsverbindungen eingesetzt, welche als ionische Gruppen Carboxyl- oder Sulfonatgruppen aufweisen.

Man kann bei der Herstellung der anionischen Dispersionen auch von Polyurethanen mit freien Hydroxyl-und/oder Aminogruppen ausgehen und diese mit aliphatischen oder aromatischen Aldehyden und gleichzeitig oder anschließend mit einem Metallsulfit, Metallhydrosulfit, Metallaminocarboxylat oder Metallaminosulfat umsetzen. Eine weitere Möglichkeit besteht schließlich darin, Polyurethane mit freien Hydroxyl- und/oder Aminogruppen mit cyclischen Verbindungen mit 3-7 Ringgliedern umzusetzen, die salzartige oder nach der Ringöffnung zur Salzbildung befähigte Gruppen aufweisen (siehe DAS 1 237 306). Dazu gehören insbesondere Sultone, wie 1,3-Propansulton, 1,4-Butansulton oder 1,8-Naphthsulton und Lactone, wie β-Propiolacton oder γ-Butyrolacton sowie Dicarbonsäureanhydride, z.B. Bernsteinsäureanhydrid.

Für das erfindungsgemäße Verfahren geeignete kationische oder anionische Polyurethane können auch gemäß DAS 1 770 068 über eine Formaldehyd-Polykondensation aufgebaut weren, Man setzt dabei höhermolekulare Polyisocyanate mit einem Überschuß an Verbindungen mit endständigen Methylolgruppen (z.B. Amin-Formaldehydharzen oder Phenol-Formaldehydharzen) um, dispergiet das Methylolgruppen aufweisende Reaktionsprodukt in Wasser und vernetzt schließlich durch Wärmebehandlung unter Bildung von Methylenbrücken.

Es ist auch möglich, im erfindungsgemäßen Verfahren Produkte einzusetzen, wie sie in den deutschen Offenlegungsschriften Nr. 1 953 345, 1 953 348 und 1 953 349 beschrieben werden. Es handelt sich dabei um wäßrige Dispersionen von ionischen Emulsionspolymerisaten, die durch radikalische Emulsionspolymerisation von olefinisch ungesättigten Monomeren in Gegenwart von kationischen oder anionischen Oligo- bzw. Polyurethanen hergestellt werden.

Man kann erfindungsgemäß auch sedimentierende, aber redispergierbare wäßrige Dispersionen von kationischen bzw. anionischen Polyurethanen einsetzen, die chemisch vernetzt sind.

Die Herstellung derartiger vernetzter Polyurethan-Teilchen kann nach verschiedenen, dem Fachmann im Prinzip bekannten Methoden erfolgen. Allgemein kann man vernetzte Polyurethan-Teilchen sowohl als Suspensionen in geeigneten organischen Lösungsmitteln oder auch in Wasser unter Zuhilfenahme eines flüssigen Mediums herstellen. Weiterhin kann man im Rahmen jedes dieser Verfahren durch Wahl geeigneter Reaktionskomponenten direkt zu vernetzten Teilchen kommen oder zunächst überwiegend linear aufgebaute thermoplastische Teilchen herstellen und diese anschließend vernetzen.

Zur Herstellung einer Suspension in einem organischen Medium wählt man im allgemeinen ein solches Lösungsmittel, in welchem sich zwar einer oder auch mehrere der Reaktionspartner lösen, nicht aber das hochmolekulare Reaktionsprodukt. Im Laufe der Reaktion in einem solchen Medium geht die zunächst gebildete Lösung allmählich in eine Suspension über, wobei dieser Vorgang zweckmäßigerweise durch Rühren unterstützt wird. Wesentlich ist, daß der Vernetzungsvorgang erst nach Ausbildung der dispersen Phase einsetzt, da sonst Verquallung erfolgt. Man kann auch solche Lösungsmittel verwenden, welche das noch unvernetzte aber bereits hochmolekulare Polyurethan in der Hitze lösen, nicht aber bei Raumtemperatur. Die Suspension kann dann durch Abkühlen unter Rühren aus der Lösung erhalten werden. Derselbe Effekt kann auch durch Zugabe eines Nichtlösers erzielt werden, wobei jedoch der Nichtlöser mit dem Lösungsmittel mischbar sein soll. Die Ausbildung einer dispersen Phase mit gewünschter Teilchengröße kann durch Zusatz geeigneter Dispergatoren beeinflußt werden.

Zur Herstellung feinteiliger Polyurethane in wäßrigen Medien sind eine Vielzahl von Verfahren bekannt. So kann man beispielsweise die Lösung eines Polyurethans in einem nicht mit Wasser mischbaren Lösungsmittel unter Mitverwendung eines Emulgators in Wasser dispergieren und das organische Lösungsmittel destillativ entfernen. Eine besonders bevorzugte Methode besteht darin, ionisch und/oder hydrophil modifizierte Polyurethane mit oder ohne Lösungsmittel mit Wasser zu vermischen, wobei sich in Abhängigkeit von der Konstitution und den Reaktionsbedingungen Polyurethan-Suspension bilden. Eine ganz besonders bevorzugte Variante dieses Verfahrens besteht darin, Polyurethan-präpolymere mit endständigen Isocyanat- oder Methylol-Gruppen einzusetzen, wobei man sehr hochprozentige Lösungen verwenden oder auch ganz lösungsmittelfrei arbeiten kann. Die primär gebildeten groben Emulsionen gehen durch Reaktion der Isocyanatgruppen mit Wasser oder in der wäßrigen Phase gelösten Di- oder Polyaminen unter Kettenverlängerung und Vernetzung in hochmolekulare Polyurethan-harnstoff-suspensionen über. Die Kettenverlängerung von Methylol-gruppen enthaltenden Prepolymeren kann beispielsweise durch Erwärmen oder Erniedrigung des pH-Wertes erzielt werden.

Auch durch Eindüsen von hochmolekularen Polyurethanen oder deren reaktiven Vorläufern in Wasser oder organische Nichtlöser lassen sich geeignete Suspensionen herstellen,

Prinzipiell sind alle zur Herstellung von PolyurethanDispersionen oder Latices vorgeschlagenen Methoden auch zur Herstellung von Polyurethan-Suspensionen geeignet, sofern Sorge dafür getragen wird, daß diese Suspensionen nicht durch Sedimentieren oder Scherkräfte koaleszieren. Dies bedeutet, daß eine noch nicht ausreichend hochmolekulare Primär-Suspension solange in Bewegung gehalten werden sollte, bis die dispergierten Teilchen klebfrei geworden sind. Zur Vernetzung der dispergierten Teilchen kann man entweder von mehr als bifunktionellen Ausgangsmaterialien ausgehen, also z.B, verzweigte Polyester oder Polyether, Triisocyanate oder Triole beim Aufbau des Polyurethans (mit)verwenden oder ein zunächst lineares, also aus bifunktionellen Komponenten hergestelltes NCO-Prepolymer mit höherfunktionellen Aminen zu einem vernetzten Polyurethan-harnstoff umsetzen. Man kann aber auch aus rein bifunktionellen Komponenten vernetzte Partikel aufbauen, indem man unter Bedingung arbeitet, die Verzweigungen bewirken, z.B. durch Zusatz von Katalysatoren, welche die Isocyanat-Trimerisierung oder die Bildung von Allophanat- bzw. Biuret-Strukturen begünstigen, In Gegenwart von Wasser und/oder Diaminen führt häufig auch schon die Verwendung von gegenüber den vorhandenen Hydroxyl- bzw. Aminverbindungen mehr als äquivalenten Mengen Isocyanate zu einer Vernetzung.

Auch lineare hochmolekulare Polyurethane können in Form einer Suspension in einem flüssigen Medium nachträglich vernetzt werden, z.B. durch Behandlung mit Polyisocyanaten oder Formaldehyd bzw. Formaldehyd abspaltenden Verbindungen. Produkte, welche basische Gruppen enthalten, können beispielsweise mit polyfunktionellen Quarternierungsmitteln oder Säuren vernetzt werden, Produkte, die acide Gruppen enthalten, mit Metalloxiden oder Polyaminen. Zur Vernetzung von Polyurethanen, welche ungesättigte Doppelbindungen enthalten, eignen sich beispielsweise die an sich bekannten Radikalbildner bzw, Schwefel, Polymercaptane und andere zur Reaktion mit Doppelbindungen befähigte zumindest bifunktionelle Agentien.

Eine detaillierte Beschreibung der Herstellung von vernetzten ionischen Polyurethansuspensionen findet sich z.B, in den Deutschen Auslegeschriften Nr, 1 495 745 (US-Patent 3 479 310), 1 282 962 (Kanad. Patent Nr. 837 174) und 1 694 129 (Britisches Patent Nr. 1 158 088) sowie den Deutschen Offenlegungsschriften Nr. 1 595 687 (US-Patent 3 814 095), 1 694 148 (US-Patent 3 622 527), 1 729 201 (Britisches Patent Nr. 1 175 339) und 1 770 068 (US-Patent Nr. 3 756 992).

Man kann für das erfindungsgemäße Verfahren, wie schon erwähnt, neben kationischen und anionischen Polyurethandispersionen auch nichtionische selbst-emulgierende wäßrige Polyurethandispersionen einsetzen.

Die Herstellung von für das erfindungsgemäße Verfahren geeigneten nichtionischen emulgatorfreien Polyurethandispersionen erfolgt beispielsweise nach dem Verfahren der DE-OS 2 141 807:

1 Mol eines trifunktionellen Polyetherpolyols wird mit 3 Mol Diisocyanat zur Reaktion gebracht. Das entstehende Isocyanatgruppen enthaltende Addukt wird so mit einem Gemisch aus
a) einem monofunktionellen niedermolekularen Alkohol und
b) einem Umsetzungsprodukt eines monofunktionellen Alkohols oder einer Monocarbonatsäure und Ethylenoxid (Molekulargewicht ca. 600)
umgesetzt, daß ein Vorpolymerisat entsteht, welches auf ungefähr 3000 Molekulargewichtseinheiten ein Mol des monofunktionellen Polyethylenoxidaddukts enthält. Dieses Vorpolymerisat wird unter Zuhilfenahme mechanischer Dispergiervorrichtungen in Wasser zu einem Latex emulgiert, der der endgültigen Polymerisation durch Reaktion mit Wasser oder einem anderen aus der Polyurethan-Chemie bekannten Kettenverlängerungsmittel unterzogen wird.

Selbstdispergierbare, nichtionische Polyurethandispersionen, die im erfindungsgemäßen Verfahren eingesetzt werden können, lassen sich gemäß Deutschen Offenlegungsschriften 2 314 512, 2 314 513 und 2 320 719 auch herstellen, indem man in lineare Polyurethane über Allophanat- oder Biuretgruppen gebundene seitenständige Polyethylenoxideinheiten einbaut.

Die Herstellung dieser in Wasser selbst dispergierbaren Polyurthane erfolgt nach den an sich bekannten Methoden der Polyurethan-Chemie durch Umsetzung von im Sinne der Isocyanat-Polyadditionsreaktion difunktionellen, endständige gegenüber Isocyanatgruppen reaktionsfähige Gruppen aufweisenden, organischen Verbindungen des Molekulargewichtsbereichs 500 - 6000, vorzugsweise 600 - 3000, mit organischen Diisocyanaten und gegebenenfalls den in der Polyurethan-Chemie an sich bekannten difunktionellen Kettenverlängerungsmitteln mit einem Molekulargewicht unter 500. Wesentlich ist hierbei die (Mit)verwendung von organischen Diisocyanaten der allgemeinen Formel 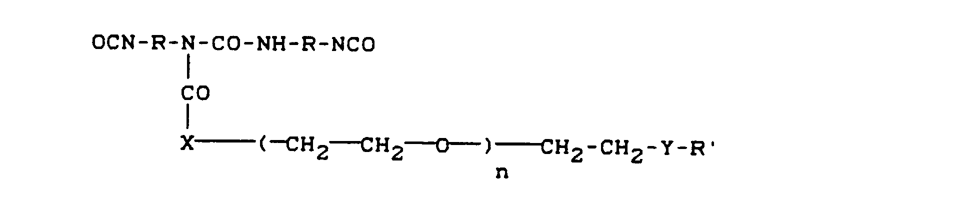 wobei
- R: für einen organischen Rest steht, wie er durch Entfernung der Isocyanatgruppen aus einem organischen Diisocyanat des Molekulargewichtsbereichs 112 - 1000 erhalten wird,
- R': für einen einwertigen Kohlenwasserstoffrest mit 1 - 12 Kohlenwasserstoffatom steht,
- X und Y: gleiche oder verschiedene Reste darstellen und für Sauerstoff oder einen Rest der Formel -N(R")-stehen, wobei R" für einen einwertigen Kohlenwasserstoffrest mit 1 - 12 Kohlenstoffatomen steht und
- n: eine ganze Zahl von 9 - 89 bedeutet.

Diese speziellen Diisocyanate werden vorzugsweise im Gemisch mit nicht modifierten Diisocyanaten der allgemeinen Formel (R(NCO)₂ eingesetzt, wobei die zum Einsatz gelangenden Diisocyanat-Gemische 5 - 100, vorzugsweise 10 - 50 Mol-% an modifizierten Diisocyanaten enthalten sollen.

Es ist auch möglich, selbstdispergierbare, nichtionische Polyurethandispersionen zu erhalten, wenn man Polyethylenoxid-Seitenketten über die Diolkomponenten einführt. Neben den oben genannten höhermolekularen Diolen, Diisocyanaten der Formel R(NCO)₂ und gegebenenfalls Kettenverlängerungsmittel werden dabei auch Diole der allgemeinen Formel 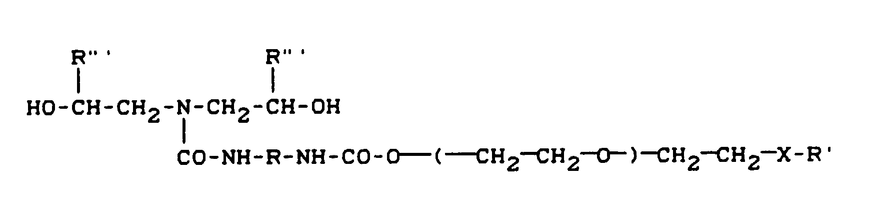 mitverwendet, in welcher
- R: einen zweiwertigen Rest darstellt, wie er durch Entfernung der Isocyanatgruppen aus einem Diisocyanat des Molekulargewichts 112 - 1000 erhalten wird,
- x: für Sauerstoff oder -NR"- steht,
- R' und R": gleich oder verschieden sind und für einwertige Kohlenwasserstoffreste mit 1 - 12 Kohlenstoffatomen stehen,
- R"': für Wasserstoff oder einen einwertigen Kohlenwasserstoffrest mit 1 - 8 Kohlenstoffatomen steht und
- n: eine ganze Zahl von 4 - 89 bedeutet.

Im erfindungsgemäßen Verfahren können auch Dispersionen verwendet werden, die mit Hilfe von Emulgatoren hergestellt wurden. Produkte dieser Art sind beispielsweise in der DAS 1 097 673 und in einem Rest von S.P. Suskind in Journal of Applied Polymer Science, 9 1965, 2451-2458 beschrieben.

Bevorzugt werden im erfindungsgemäßen Verfahren wäßrige Polyurethandispersionen verwendet, welche durch ionische und nichtionisch-hydrophile Gruppen modifiziert sind. Durch diese Kombination wird vorteilhafterweise auch in Abwesenheit von Alkoholen eine ausreichende Elektrolytstabilität erzielt. Die Herstellung derartiger Polyurethandispersionen ist ebenfalls an sich bekannt und z.B. in den DE-OSen 2 551 094, 2 651 506 und 2 651 505 beschrieben. Als Zusatz zu den wäßrigen Polyurethandispersionen können auch wäßrige Polymerlatices, die nicht zur Koagulation neigen, mitverwendet werden, z.B. Acrylatdispersionen und Polyvinylacetatdispersionen,

Im allgemeinen verfährt man bei der Herstellung von ionisch/nichtionisch-hydrophilen Polyurethanen so, daß zum Aufbau der hochmolekularen Polyurethane bifunktionelle, lineare Polyether oder Polyester mit einem Molekulargewicht von ca. 400 - 10.000 in Gegenwart von nichtionisch-hydrophilen Modifizierungskomponenten und gegebenenfalls Kettenverlängerungsmitteln und ionisch hydrophilen Komponenten der oben diskutierten Art mit Diisocyanaten zu Prepolymeren umgesetzt werden, welche im Anschluß daran meist in einem Lösungsmittel, bevorzugt Aceton, mit einem Kettenverlängerungsmittel wie Diaminen und/oder Hydrazin bzw. gegebenenfalls deren Alkiminen, Ketiminen oder Aldazinen bzw. Ketazinen zu einem hochmolekularen Polyurethan umgesetzt werden. Anschließend wird die acetonische Lösung des hochmolekularen Polyurethans mit Wasser vermischt und das Aceton abdestilliert. Insbesondere bei Anwendung des sog. Ketiminverfahrens können die wäßrigen Polyurethandispersionen auch nach dem Schmelzdispergierverfahren hergestellt werden.

Die Einführung der ionischen Gruppen bzw, der in ionische Gruppen überführbaren Gruppen in die erfindungsgemäß bevorzugten ionisch/nichtionisch hydrophilen Polyurethane geschieht ebenfalls in an sich bekannter Weise durch Mitverwendung von ionischen Gruppen bzw, in ionische Gruppen überführbare Gruppen aufweisenden Verbindungen, welche gleichzeitig Isocyanatgruppen oder vorzugsweise mit gegenüber Isocyanatgruppen reaktionsfähige Gruppen wie insbesondere alkoholische Hydroxylgruppen enthalten, wie sie oben ausführlich beschrieben sind. Falls die Einführung von freien Carboxylgruppen als potentielle anionische Gruppen erwünscht ist, empfiehlt sich die Mitverwendung von Verbindungen, die neben freien Carboxylgruppen gegenüber Isocyanatgruppen stärker reaktive Gruppen, insbesondere Hydroxylgruppen, aufweisen. Ein typisches Beispiel einer derartigen Aufbaukomponente ist die Dimethylolpropionsäure, die bei Raumtemperatur oder mäßig erhöhter Temperatur mit organischen Polyisocyanaten selektiv unter ausschließlicher Bildung von Urethangruppen und Beibehaltung der freien Carboxylgruppe abreagiert.

Die in den erfindungsgemäß bevorzugt als Elastifizierungsmittel zu verwendenden Polyurethanen vorliegenden, innerhalb von Polyetherketten eingebauten Ethylenoxideinheiten werden vorzugsweise durch Mitverwendung von seitenstandige oder endständige Ethylenoxideinheiten enthaltenden Alkoholen und/oder durch Mitverwendung von derartigen Polyalkylen-Seitenketten aufweisenden Diisocyanaten bei der Herstellung der Polyurethane eingeführt, Derartige, Ethylenoxideinheiten enthaltende Polyalkylenoxid-Ketten aufweisende Aufbaukomponenten sind beispielsweise in den zum Teil schon oben genannten DE-OS 2 314 512, DE-OS 2 651 506, DE-OS 2 314 513, US-PS 3 920 598 und US-PS 3 905 929 beschrieben.

Eine weitere Möglichkeit zur Einführung von Ethylenoxideinheiten besteht in der Mitverwendung von Polyetherpolyolen, welche eine entsprechende Anzahl solcher Einheiten aufweisen.

Die beispielhaft genannten hydrophilen bzw. potentiell hydrophilen Aufbaukomponenten werden bei der Herstellung der erfindungsgemäß zu verwendenden Polyurethane in solchen Mengen mitverwendet, daß die Dispergierbarkeit in Wasser gewährleistet ist. Hierzu können, wie schon erwähnt, sowohl ionische bzw, potentiell ionische als auch nicht-ionisch hydrophile Gruppen der beispielhaft genannten Art als auch vorzugsweise beide Arten an hydrophilen Gruppierungen gleichzeitig eingebaut werden. Der Gehalt der erfindungsgemäß zu verwendenden Polyurethane an den genannten hydrophilen Gruppierungen liegt bei der alleinigen Verwendung von ionischen Gruppen bzw, von in ionische Gruppen überführbaren Gruppen als hydrophile Gruppen vorzugsweise bei 30 bis 130 Milliäquivalenten an solchen Gruppen pro 100 g Polyurethanfeststoff, bzw. bei der alleinigen Verwendung von Ethylenoxideinheiten als hydrophile Gruppierungen in der Regel bei 2 bis 20 Gew.-%, vorzugsweise bei 8 bis 16 Gew.-% an innerhalb von Polyetherketten eingebauten Ethylenoxideinheiten, Falls beide Arten von hydrophilen Gruppen vorliegen, liegen in den Polyurethanen vorzugsweise 0,1 bis 40 Milliäquivalente/100 g an ionischen Gruppen oder an in ionische Gruppen überführbaren Gruppen und gleichzeitig 0,5 - 10 Gew.-% an innerhalb von Polyetherketten eingebauten Polyethylenoxideinheiten vor.

Falls die Dispergierbarkeit der Polyurethane teilweise oder ausschließlich durch den Einbau von potentiellen ionischen Gruppen gewährleistet ist, muß selbstverständlich vor oder während des Dispergiervorgangs der Polyurethane für eine zumindest teilweise Überführung der potentiellen ionischen Gruppen in ionische Gruppen Sorge getragen werden, so daß der Gehalt der dispergiert vorliegenden Polyurethane an ionischen Gruppen den oben genannten Bedingungen entspricht. Derartige Polyurethane deren Dispergierbarkeit teilweise oder ausschließlich durch die Anwesenheit von potentiellen ionischen Gruppen gewährleistet ist, sind, strenggenommen, selbstverständlich nicht in Wasser, sondern lediglich in Wasser dispergierbar, das ein entsprechendes Neutralisationsmittel enthält.

Wie schon erwähnt, haben die erfindungsgemäß bevorzugt einzusetzenden, gleichzeitig ionische und nichtionische hydrophile Gruppen aufweisenden Polyurethane ebenso wie rein nichtionische Polyurethane den Vorteil, daß ihre Dispersion in Wasser ausreichend elektrolytstabil sind, d.h. in Kontakt mit der Viskose nicht koagulieren. Bei der Verwendung von nur durch den Einbau ionischer Gruppen wasserdispergierbar gemachter Polyurethane ist es, um ein Koagulieren des Polyurethans zu vermeiden, in der Regel noch erforderlich, im Ansatz bis zu 20 Gew.-%, vorzugsweise 1 bis 10 Gew.-% (bezogen auf das Gesamtgemisch), mindestens eines wasserlöslichen Alkohols wie z.B. Methanol, Ethanol, Propanol, t-Butanol, Glycerin, Formose, Formit oder Polyvinylalkoholpulver (bevorzugt Ethanol) mitzuverwenden. Außerdem kann der Ansatz noch bis zu 20 Gew.-% an anderen (z.B. aus der Herstellung der Polyurethandispersion stammenden) organischen Lösungsmitteln enthalten, z.B. Aceton, Methylethylketon, Dimethylformamid oder N-Methylpyrrolidon. Es ist jedoch dafür Sorge zu tragen, daß derartige organische Lösungsmittel - ebenso wie gegebenenfalls mitverwendete flüchtige Alkohole - während des Trocknungsprozesses entweichen können, da andernfalls der ausgehärtete Verbundwerkstoff nur eine unzureichende mechanische Festigkeit aufweist.

Bei der erfindungsgemäßen Cellulose handelt es sich um sog. regenerierte Cellulose, die auch als Cellulosehydrat oder Hydratcellulose bezeichnet wird. Die regenerierte Cellulose wird vorzugsweise nach dem Viskoseverfahren hergestellt. Verwiesen wird in diesem Zusammenhang auf Ullmann's Enzyklopädie der Technischen Chemie, 3. Auflage, 5. Bd, 1954, insb. Seite 201 ff.

Nach der besonders bevorzugten Ausführungsform des erfindungsgemäßen Verfahrens wird hydrophiles Polyurethan (siehe Beispiel 1) gelöst in Wasser, gegebenenfalls unter Zusatz von NaOH oder KOH unter Einstellung eines alkalischen pH-Wertes zur Viskoselösung unter Rühren zudosiert. Die Viskose/Polyurethan(harnstoff)-Mischung wird gegebenenfalls entgast, nach Zusatz der üblichen Hilfs- und Zusatzmittel filtriert und anschließend über die schon beschriebenen Düsen dem Koagulations- und Regenerationsprozeß zugeführt.

Es muß als außerordentlich überraschend angesehen werden, daß die erfindungsgemäßen Cellulose-Kunststoff-Blends aus bevorzugt wasserlöslichen Polyetherurethanen gewonnen werden können, obwohl dem Fachmann bekannt ist, daß die wasserlöslichen Bestandteile in den Regenerier-und Waschbädern wieder ausgewaschen werden. Dies ist hier überraschenderweise nicht der Fall. Dieser Effekt wird insbesondere dann erreicht, wenn die Regenerier-und Waschbäder auf Temperaturen >40°C aufgeheizt werden.

Nach einer weiteren bevorzugten Ausführungsform des erfindungsgemäßen Verfahrens wird der Viskose/Polyurethan(harnstoff)mischung 1 bis 10 Gew.-x, bezogen auf Cellulosegehalt, Farbpigment, wie z.B. Titanoxid, unter Rühren hinzugefügt.

Die erfindungsgemäß erhaltenen Cellulose-Kunststoff-Legierungen, deren wesentlicher Kunststoff-Bestandteil Polyurethan(harnstoff) darstellt, können durch Zugabe von in Wasser löslichen Polymeren in ihren resultierenden Eigenschaften noch modifiziert werden. Als zu-sätzlicher Legierungsbestandteil wird erfindungsgemäß Polyvinylpyrrolidon, Polyvinylalkohol, Polyethylen-oxidpolyester des MG 10 000 bis 50 000, Polyacrylsäure und/oder Mischpolymerisate, wie sie in DE 37 11 571 beschrieben sind, verwendet.

Die erfindungsgemäßen Cellulose-Kunststoff-Blends können mit einer Brandschutzausrüstung versehen werden. Nach einer bevorzugten Ausführungsform des erfindungsgemäßen Verfahrens wird die modifizierte und unmodifizierte Regeneratcellulose aus wäßriger Lösung mit Brandschutz-mitteln versehen, welche bestehen können aus Calciumchlorid, Magnesiumchlorid, Ammoniumhydrogenphosphat, Natriumammoniumhydrogenphosphat, Ammoniumpolyphosphat, Phosphoniumsalz/Harnstoff-Kondensaten oder anderen bekannten, nichtpermanenten oder permanenten Brandschutzausrüstungen für Cellulose.

Die erfindungsgemäßen Cellulose-Kunststoff-Blends lassen sich nach den bekannten Verfahren einfärben, wobei wasserlösliche Farbstoffe zur Anwendung kommen.

Unter den Hilfs- und Zusatzstoffen wird außerdem die Verwendung von Hilfsmitteln und Additiven verstanden, wie sie üblicherweise für die Viskosefaser-Industrie eingesetzt werden.

Die nach Durchführung des erfindungsgemäßen Verfahrens erhältlichen Formkörper können zum Schutz vor Alterungsvorgängen lackiert werden. Geeignet sind hierzu Lacke, die aus wäßriger oder lösungsmittelhaltiger Phase, wie z.B. Nitrocellulose, appliziert werden können. Besonders bevorzugt sind solche Lacke, die die biologische Abbaubarkeit der Formkörper nicht verhindern.

Die biologische Abbaubarkeit dieser Folie wurde in Kompostier- und Laborversuchen mit Simulation einer Kompostierung sichergestellt. Die durchschnittlichen Abbauzeiten einer 25 µm starken Folie betragen im Komposter 1 bis 2 Wochen.

### Patentbeispiele

### Beispiel 1

Herstellung eines wasserlöslichen Polyurethans (bevorzugter Blendpartner).

2,25 Mol (4,5 kg) eines auf Propylenglykol gestarteten Polyethers, bei dem 50% Ethylenoxid und 50% Propylenoxid statistisch polyaddiert wurden und dessen MG 2000 und dessen OH-Zahl 56 beträgt, werden mit 0,25 Mol (0,3875 kg) eines auf Ethylenglykol gestarteten Polyethers, bei dem 100% Ethylenoxid polyaddiert wurde und dessen MG 1550 und dessen OH-Zahl 72 beträgt, gemischt und 30 min. bei 120°C am Wasserstrahlvakuum entwässert.

Anschließend gibt man in die Mischung 2,375 Mol (0,5273 kg) Isophorondiisocyanat und 0,1 g Dibutylzinndilaurat. Die Mischung wird 2 Stunden bei 120-130°C gerührt, Danach ist das Gemisch NCO-frei (IR).

Das farblose bis leicht gelbliche Polyurethan ist bei Raumtemperatur hochviskos.

### Beispiel 2

1 kg des Polyurethans (PUR) aus Beispiel 1 wird bei Raumtemperatur in 1,0 kg Wasser gelöst. Es entsteht eine klare, farblose Lösung mit einer Viskosität von 5000 mPas (25°C).

### Beispiel 3

Gemäß Beispiel 1 der DE-A-26 51 506 wird eine handelsübliche Polyurethanharnstoffdispersion in Wasser hergestellt. Die Dispersion besitzt einen Feststoffanteil von 50% und enthält ca. 3 Gew.-% Polyethylenoxidsegmente und 3 äquivalente Sulfonatgruppen / 100 g Feststoff.

### Beispiel 4

(Herstellung eines erfindungsgemäßen Cellulose-Polyurethan-Blends) 20 kg alkalische Viskoselösung mit einem Gehalt von 9,2 Gew.-% Zellstoff und einer Viskosität von 7700 mPas (25°C) werden mit 1,84 kg einer 10 Gew.-%igen wäßrigen Lösung des Polyurethans aus Beispiel 2 bei Raumtemperatur gemischt.

Es entsteht eine klare, stippenfreie gelbe Blendlösung (I) mit einer Viskosität von 7900 mPas (25°C). Die Blendlösung (I) wird durch Anlegen eines Vakuums unter Rühren entgast, anschließend in einen Vorratsbehälter überführt und von dort über Pumpen in einen schlitzförmigen Gießer dosiert. Die Cellulose-Kunststoff-legierung durchläuft anschließend die üblichen Prozesse zur Koagulation, Regenerierung und Trocknung entsprechend dem Viskoseverfahren. Man erhält einen Formkörper in Folienform mit vorzüglichen mechanischen Eigenschaften. Die erhaltene Folie läßt sich ohne Knistern auf eine Rolle aufwickeln. Die biologische Abbaubarkeit dieser Folie wurde unter Verwendung von kommunalen Abwässern sichergestellt.

Die erhaltene Folienbahn wurde nach den üblichen Verfahren mit PVDC und Nitrolack einseitig und beidseitig lackiert. Es entstehen hochglänzende, knisterfreie, kompostierbare Folien.

### Beispiel 5

Man verfährt wie im Beispiel 4 beschrieben nur mit dem Unterschied, daß der alkalischen Viskoselösung 1,84 kg Polyurethan als 10%ige wäßrige Lösung und 0,0368 kg an Polyvinylpyrrolidon zugesetzt werden.

### Beispiel 6

Man verfährt wie im Beispiel 4 beschrieben nur mit dem Unterschied, daß der alkalischen Viskoselösung 1,84 kg Polyurethan als 10%ige wäßrige Lösung und 0,0368 kg an Polyvinylalkohol zugesetzt werden.

### Beispiel 7

Man verfährt wie im Beispiel 4 beschrieben nur mit dem Unterschied, daß der alkalischen Viskoselösung 1,84 kg Polyurethan als 10%ige wäßrige Lösung und 0,0368 kg eines auf Diethylenglykol gestarteten Ethylenoxidpolyethers des MG 20 000 zugesetzt werden.

Die gemäß Beispielen 5, 6 und 7 erhaltenen Cellulose-Kunststoff-Legierungen besitzen nach Trocknung einen weichen Griff und vorzügliche mechanische Eigenschaften.

### Beispiel 8

Man verfährt wie im Beispiel 4 beschrieben nur mit dem Unterschied, daß der alkalischen Viskoselösung 0,368 kg der Polyurethanpolyharnstoffdispersion aus Beispiel 3 zugesetzt werden.

### Beispiel 9

Man verfährt wie im Beispiel 8 beschrieben nur mit dem Unterschied, daß dem Viskose/Polyurethan(harnstoff)-Blend zusätzlich 0,0368 kg eines üblichen Additivs, nämlich eines ethoxylierten Fettamins, zugesetzt werden.

### Beispiel 10

Man verfährt wie im Beispiel 4 beschrieben nur mit dem Unterschied, daß der alkalischen Viskoselösung 9,2 kg der Polyurethanlösung aus Beispiel 2 zugesetzt werden. Nach Trocknen erhält man eine reißfeste, opake Folie mit besonders weichem Griff.

## Patentansprüche

1. Mischung aus Cellulosehydrat und wenigstens einem zusätzlichen Mischungsbestandteil, dadurch gekennzeichnet, daß als ein zusätzlicher Mischungsbestandteil ein Polyurethan(harnstoff) in einer Menge von wenigstens 5 Gew.-% enthalten ist, und daß wenigstens 20 Gew.-% der Mischung aus Cellulosehydrat bestehen.

2. Mischung nach wenigstens einem der vorhergehenden Ansprüche, dadurch gekennzeichnet, daß zuätzlich Polyvinylpyrrolidon und/oder Polyvinylalkohol und/oder Polyethylenoxidpolyether und/oder Copolymere daraus enthalten sind.

3. Mischung nach wenigstens einem der vorhergehenden Ansprüche, dadurch gekennzeichnet, daß der verwendete Polyurethan(harnstoff) 0,1 - 40 Milliäquivalente an ionischen Gruppen oder an in ionischen Gruppen überführbare Gruppen, bezogen auf 100 g Polyurethan(harnstoff) und 0,5 - 10 Gew.-% an in Polyetherketten eingebaute Ethylenoxideinheiten aufweist.

4. Mischung nach wenigstens einem der vorhergehenden Ansprüche, dadurch gekennzeichnet, daß das verwendete Polyurethan aus Isophorondiisocyanat, Hexamethylendiisocyanat oder Perhydrodiphenylmethandiisocyanat aufgebaut ist.

5. Mischung nach wenigstens einem der vorhergehenden Ansprüche, dadurch gekennzeichnet, daß beim Aufbau des verwendeten Polyurethan(harnstoffs) gegebenenfalls Kettenverlängerer vom Typ Butandiol, Hexandiol, Ethylenglykol, Hexamethyldiamin, Bis-(3-aminopropyl)-methylamin für sich allein oder in Mischung mit anderen verwendet werden.

6. Mischung nach wenigstens einem der vorhergehenden Ansprüche, dadurch gekennzeichnet, daß das verwendete Polyurethan aus wasserlöslichen Polyethern des MG Bereichs 400 - 10 000 und Diisocyanaten aufgebaut ist.

7. Verfahren zur Herstellung von Cellulose-Kunststoff-Blends gemäß wenigstens einem der vorhergehenden Ansprüche, dadurch gekennzeichnet, daß man Viskose mit den Blendbestandteilen, gegebenenfalls unter Verwendung weiterer Hilfs- und Zusatzstoffe, mischt, anschließend durch saure Koagulations- und Regeneriermittel bei T >40°C in Cellulosehydrat-Gel-Blends überführt, mit üblichen Weichmachern behandelt und abschließend trocknet.

8. Verfahren nach Anspruch 7, dadurch gekennzeichnet, daß das verwendete Polyurethan(harnstoff) in flüssiger Form gelöst oder dispergiert in Wasser zum Einsatz gelangt.

9. Verwendung der Blends gemäß einem der Ansprüche 1 bis 6 als biologisch abbaubares Verpackungsmaterial, insbesondere Flachfolien und Schlauchfolien, zur Verwendung als Verpackungsmaterialien, Müllbeutel, Einkaufstüten, Mulch- und Silofolien für die Landwirtschaft, Hygieneartikel, Außenhüllen für Babywindeln, Transparentpapiere, Kopierfolien und dekorative Materialien.

## Claims

1. Blend of cellulose hydrate and at least one additional blend component, characterised in that a quantity of at least 5 wt.% of a polyurethane(urea) is present as an additional blend component and that at least 20 wt.% of the blend consists of cellulose hydrate.

2. Blend according to at least one of the preceding claims, characterised in that polyvinyl pyrrolidone and/or polyvinyl alcohol and/or polyethylene oxide polyethers and/or copolymers thereof are additionally present.

3. Blend according to at least one of the preceding claims, characterised in that the polyurethane(urea) used has 0.1 to 40 milliequivalents of ionic groups or groups convertible into ionic groups, relative to 100 g of polyurethane(urea), and 0.5 to 10 wt.% of ethylene oxide units incorporated in polyether chains.

4. Blend according to at least one of the preceding claims, characterised in that the polyurethane used is synthesised from isophorone diisocyanate, hexamethylene diisocyanate or perhydrodiphenylmethane diisocyanate.

5. Blend according to at least one of the preceding claims, characterised in that chain extenders of the butanediol, hexanediol, ethylene glycol, hexamethylenediamine, bis-(3-aminopropyl)methylamine type are used individually or mixed with others during synthesis of the polyurethane(urea) used.

6. Blend according to at least one of the preceding claims, characterised in that the polyurethane used is synthesised from water soluble polyethers of the MW range from 400 to 10000 and diisocyanates.

7. Process for the production of cellulose/plastic blends according to at least one of the preceding claims, characterised in that viscose is mixed with the blend components, optionally together with further auxiliary substances and additives, the mixture is then converted into cellulose hydrate/gel blends by acidic coagulants and regenerating agents at T > 40°C, the blends are treated with conventional plasticisers and then dried.

8. Process according to claim 7, characterised in that the polyurethane(urea) used is used in liquid form dissolved or dispersed in water.

9. Use of the blends according to one of claims 1 to 6 as a biodegradable packaging material, in particular as flat films and tubular films, for use as packaging materials, rubbish sacks, retail bags, mulching and ensiling films for agriculture, personal hygiene products, outer covers for nappies, transparent papers, copying films and decorative materials.

## Revendications

1. Mélange d'hydrate de cellulose et d'au moins un autre constituant de mélange, caractérisé en ce qu'il contient comme autre constituant de mélange un polyuréthanne (urée) en une quantité d'au moins 5 % en poids, et en ce qu'au moins 20 % en poids du mélange sont constitués d'hydrate de cellulose.

2. Mélange suivant au moins l'une des revendications précédentes, caractérisé en ce qu'il contient en outre de la polyvinylpyrrolidone et/ou un polymère d'alcool vinylique et/ou un polyéthylèneoxy-polyéther et/ou des copolymères qui en sont dérivés.

3. Mélange suivant l'une au moins des revendications précédentes, caractérisé en ce que le polyuréthanne (urée) utilisé présente 0,1 à 40 milliéquivalents de groupes ioniques ou de groupes pouvant être convertis en groupes ioniques, pour 100 g de polyuréthanne (urée) et 0,5-10 % en poids de motifs éthylèneoxy incorporés aux chaînes de polyéther.

4. Mélange suivant l'une au moins des revendications précédentes, caractérisé en ce que le polyuréthanne utilisé est constitué de diisocyanate d'isophorone, d'hexaméthylènediisocyanate ou de perhydrodiphénylméthane-diisocyanate.

5. Mélange suivant au moins l'une des revendications précédentes, caractérisé en ce qu'on utilise éventuellement des agents d'allongement de chaîne du type du butanediol, de l'hexanediol, de l'éthylèneglycol, de l'hexaméthyl-diamine, de la bis- (3-aminopropyl)-méthylamine individuellement ou en mélange avec d'autres dans l'édification du polyuréthanne(urée) utilisé.

6. Mélange suivant au moins l'une des revendications précédentes, caractérisé en ce que le polyuréthanne utilisé est constitué de polyéthers hydrosolubles de poids moléculaire compris dans la plage de 400 à 10 000 et de diisocyanates.

7. Procédé de production de mélanges cellulose-matière plastique suivant au moins l'une des revendications précédentes, caractérisé en ce qu'on mélange de la viscose avec les constituants de mélange, en utilisant éventuellement d'autres substances auxiliaires et d'autres additifs, on transforme ensuite le produit par les agents acides de coagulation et de régénération à une température T supérieure à 40°C en mélanges hydrate de cellulose-gel, qu'on traite avec des plastifiants classiques et finalement qu'on sèche.

8. Procédé suivant la revendication 7, caractérisé en ce qu'on met en oeuvre le polyuréthanne(urée) utilisé sous forme liquide en solution ou en dispersion dans l'eau.

9. Utilisation des mélanges suivant l'une des revendications 1 à 6 comme matériau d'emballage biodégradable, en particulier comme feuilles planes et feuilles tubulaires, destinées à être utilisées comme matériaux d'emballage, sacs poubelles, sacs à provisions, feuilles pour paillis et silos pour l'agriculture, articles d'hygiène, enveloppes extérieures de couches pour nourrissons, papiers transparents, feuilles pour tirage et matériaux décoratifs.
